# EUROPÄISCHE PATENTSCHRIFT

(11) **EP 2 063 591 B1**
(45) Veröffentlichungstag und Bekanntmachung des Hinweises auf die Patenterteilung: **16.01.2013**
(21) Anmeldenummer: 08019990.4
(22) Anmeldetag: 17.11.2008
(51) Int. Cl.: H04L 12/58, H04W 4/12, H04L 29/12

(54) **Verfahren und Vorrichtung zur Übermittlung von Nachrichten in Telekommunikationsnetzen**
Method and device for message transmission in telecommunications networks
Procédé et dispositif pour la transmission de messages dans des réseaux de télécommunication

(30) Priorität: 22.11.2007 DE 102007056474
(43) Veröffentlichungstag der Anmeldung: 27.05.2009
(73) Patentinhaber: Vodafone Holding GmbH, 40213 Düsseldorf (DE)
(72) Erfinder: Hartl, Mike, 40878 Ratingen (DE); Bieniek, Rainer, 47178 Duisburg (DE)
(74) Vertreter: Ring & Weisbrodt

(56) Entgegenhaltungen:
- EP-A2- 1 732 334
- WO-A1-02/060199
- US-A1- 2002 110 225
- US-A1- 2004 122 838

## Beschreibung

Die vorliegende Erfindung betrifft ein Verfahren zur Übermittlung von Nachrichten in Telekommunikationsnetzen, vorzugsweise Mobilfunknetzen gemäß einem GSM-, GPRS- und/oder UMTS-Funknetzstandard, mittels eines Nachrichtendienstes eines Telekommunikationsnetzes, wobei seitens wenigstens eines an der Nachrichtenübermittlung beteiligten Netzknotens des Telekommunikationsnetzes für jeden Nachrichtenempfänger einer einen Nachrichteninhalt und wenigstens eine Information zur Kontaktierung des Nachrichtenempfängers in einem Telekommunikationsnetz aufweisende Nachricht empfangen wird.

Gegenstand der vorliegenden Erfindung ist ferner ein Netzknoten in einem Telekommunikationsnetz, vorzugsweise einem Mobilfunknetz gemäß einem GSM-, GPRS- und/oder UMTS-Funknetzstandard, welcher an der Übermittlung von Nachrichten in dem Telekommunikationsnetz mittels eines Nachrichtendienstes des Telekommunikationsnetzes beteiligt ist und ausgebildet und/oder eingerichtet ist, ein erfindungsgemäßes Verfahren zumindest teilweise auszuführen.

Im Stand der Technik sind verschiedene Systeme, Verfahren und Vorrichtungen zur Übermittlung von Nachrichten in einem Telekommunikationsnetz, insbesondere ein Mobilfunknetz gemäß einem GSM- (GSM: Global System Mobile), GPRS- (General Paket Radio Service) und/oder UMTS-Funknetzstandard (UMTS: Universal Mobile Telecommunications System) bekannt.

So offenbart die EP 1 732 334 A2 eine Vermittlungseinrichtung und ein Vermittlungsverfahren zur Übermittlung von Nachrichten über ein Telekommunikationsnetzwerk. Dabei ist vorgesehen, dass ein Absender mit einem Mobilfunkendgerät eine Nachricht versendet, welche durch die Vermittlungseinrichtung gleichzeitig und parallel an die Endgeräte von Teilnehmern einer Gruppe von Empfängern übermittelt werden, derart, dass die Empfänger gleichzeitig eine identische Nachricht erhalten.

Aus der WO 02/060199 A1 ist ein Verfahren zur Übermittlung von Nachrichten bekannt, bei der eine Nachricht an eine Gruppe von Empfängern unter Nutzung einer der Gruppe zugeordneten Adressierungsinformation gesendet wird.

Die US 2002/0110225 A1 offenbart ein Verfahren zum Übermitteln von Sprachnachrichten. Eine Sprachnachricht wird dabei zunächst von dem Sender an eine Servereinrichtung des Telekommunikationsnetzes übertragen. Unter Berücksichtigung einer durch den Sender eingegebenen Adressierungsinformation des Empfängers wird die Sprachnachricht dann von der Servereinrichtung an den Empfänger zugestellt. Dabei besteht die Möglichkeit, dass seitens der Servereinrichtung ein elektronisches Adressbuch bereitgestellt wird, so dass der Sender einer Sprachnachricht Empfängerdaten nicht erneut eingeben muss.

Die US 2004/0122838 A1 betrifft die Übermittlung von Nachrichten von einem Sender an mehrere Empfänger. Dabei ist vorgesehen, dass zur komfortableren Eingabe von Empfängern nach der Eingabe von Empfängern basierend auf einer Nutzungshistorie Gruppen von Empfängern zur Auswahl vorgeschlagen werden.

Die genannten Druckschriften betreffen zumindest mittelbar die Übermittlung von Nachrichten in Telekommunikationsnetzen.

Bei der Erstellung entsprechender Nachrichten seitens eines in einem Telekommunikationsnetz betreibbaren Endgerätes eines Nachrichtensenders kann dieser dabei über entsprechende Eingabeeinheiten und Editoren seitens des Endgerätes insbesondere eine für wenigstens zwei Nachrichtenempfänger bestimmte, einen Nachrichteninhalt und für jeden der Nachrichtenempfänger wenigstens eine Information zur Kontaktierung des Nachrichtenempfängers in einem Telekommunikationsnetz aufweisende Nachricht erstellen. Die entsprechend erstellte Nachricht wird dann von dem Endgerät an das Telekommunikationsnetz unter Nutzung des Nachrichtendienstes des Telekommunikationsnetzes gesendet. Nachteilig bei dieser Art von Gruppenkommunikation, wie beispielsweise durch die EP 1 732 334 A2 offenbart, ist, dass entsprechende Nutzer sei es als Sender oder als Nachrichtenempfänger jeweils die Kontaktinformationen der Gruppenmitglieder einer entsprechenden als Gruppenkommunikation zu versendenden Nachricht für jedes Versenden von Nachrichten die Kontaktinformation der Gruppenmitglieder separat eingeben beziehungsweise erfassen müssen. Die Handhabung und/oder Nutzung einer entsprechenden Nachrichtenübermittlung als Gruppenkommunikation ist dementsprechend nutzerunfreundlich und unkomfortabel.

Mit den vorgeschlagenen Lösungen gemäß der WO 02/060199 A1, der US 2002/0110225 A1 und der US 2004/0122838 A1 wird eine entsprechende Handhabung einer Nachrichtenübermittlung zwar verbessert. Es besteht aber der weitere Nachteil, dass entsprechende Gruppenkommunikationsanwendungen jeweils das Versenden einzelner Nachrichten an den jeweiligen Nachrichtenempfänger und somit die jeweiligen für die Nachrichtenübermittlung anfallenden Kosten für jeden Einzelfall bedingen.

Der Erfindung liegt in Anbetracht dieses Standes der Technik die Aufgabe zugrunde, die Übermittlung von Nachrichten in Telekommunikationsnetzen derart zu verbessern, dass ohne Änderungen seitens der von Nachrichtensendern und/oder Nachrichtenempfängern genutzten Endgeräte auf einfache und kostengünstige Art und Weise eine Nachrichtenübermittlung mit Gruppenkommunikationsfunktionalität realisierbar ist.

Zur technischen Lösung wird mit der vorliegenden Erfindung ein Verfahren zur Übermittlung von Nachrichten in Telekommunikationsnetzen, vorzugsweise Mobilfunknetzen gemäß einem GSM-, GPRS- und/oder UMTS-Funknetzstandard, mittels eines Nachrichtendienstes eines Telekommunikationsnetzes, wobei seitens wenigstens eines an der Nachrichtenübermittlung beteiligten Netzknotens des Telekommunikationsnetzes für jeden Nachrichtenempfänger einer einen Nachrichteninhalt und wenigstens eine Information zur Kontaktierung des Nachrichtenempfängers in einem Telekommunikationsnetz aufweisende Nachricht empfangen wird, vorgeschlagen, welches dadurch gekennzeichnet ist, dass seitens des Netzknotens anhand der empfangenen Nachrichten erkannt wird, dass ein Nachrichtensender innerhalb einer vorgebbaren Dauer nacheinander wenigstens zwei Nachrichten an unterschiedliche Nachrichtenempfänger sendet, die Länge und/oder der Inhalt der Nachrichteninhalte der Nachrichten erfasst wird, bei identischer Länge und/oder Gleichheit der Nachrichteninhalte eine Information zur zumindest netzwerkseitigen Gruppierung des Nachrichtensenders und der Nachrichtenempfänger erzeugt wird, die Nachrichten mit der Gruppierungsinformation versehen werden und die Nachrichten unter Nutzung der Gruppierungsinformation und der Kontaktierungsinformation der jeweiligen Nachrichtenempfänger an die Nachrichtenempfänger weitergeleitet werden, wobei die Kontaktierungsinformation des Nachrichtensenders und/oder wenigstens eines Nachrichtenempfängers einen Nachrichtensofortversand in einem Verbund von Rechnernetzen wie dem Internet oder einem Intranet ermöglicht.

Der Erfindung macht sich die Erkenntnis zunutze, dass durch eine netzwerksseitige Detektierung und/oder Identifizierung einer von einem Nachrichtensender an wenigstens zwei Nachrichtenempfänger versendeten Nachricht als Gruppennachricht und anschließender Hinzufügung und/oder Bereitstellung einer zumindest netzwerkseitig eine Gruppierung des Nachrichtensenders und der Nachrichtenempfänger ermöglichenden Gruppierungsinformation auf einfache und kostengünstige Art und Weise eine Nachrichtenübermittlung mit Gruppenkommunikationsfunktionalität realisierbar ist, ohne dass Änderungen seitens der von Nachrichtensendern und/oder Nachrichtenempfängern genutzten Endgeräte erforderlich sind. Neben dem Vorteil, dass keine Änderungen seitens der genutzten Endgeräte erforderlich sind, müssen entsprechende Nutzer des Dienstes diesen nicht extra - auch nicht im voraus - bei einem entsprechenden Dienstanbieter abonnieren. Darüber hinaus ist die Übermittlung von Nachrichten in Telekommunikationsnetzen durch die erfindungsgemäß vorgesehene Möglichkeit der Nutzung einer einen Nachrichtensofortversand - einem sogenannten Instant Messaging wie es beispielsweise seitens der DE 102 53 687 A1 beschrieben ist - in einem Verbund von Rechnernetzen wie dem Internet oder einem Intranet ermöglichenden Kontaktierungsinformation seitens des Nachrichtensenders und/oder seitens des wenigstens einen Nachrichtenempfängers eine hinsichtlich der Funktionalitäten und Nutzungsmöglichkeiten einer erfindungsgemäßen Nachrichtenübermittlung weiter verbessert, insbesondere da eine erfindungsgemäße Nachrichtenübermittlung auch in und/oder von einem in dem Rechnernetz betreibbaren Endgerät ermöglicht wird.

Eine vorteilhafte Ausgestaltung der Erfindung sieht vor, dass der einen Nachrichtensofortversand in einem Verbund von Rechnernetzen wie dem Internet oder einem Intranet ermöglichenden Kontaktierungsinformation des Nachrichtensenders und/oder des wenigstens einen Nachrichtenempfängers eine Information zur Kontaktierung des Nachrichtensenders oder des jeweiligen Nachrichtenempfängers in dem Telekommunikationsnetz zugeordnet wird. Hierzu ist vorteilhafterweise seitens des Telekommunikationsnetzes eine Umsetzungseinrichtung, ein sogenanntes Gateway, vorgesehen, welche eine Nachrichtenübermittlung von dem Telekommunikationsnetz in das Rechnernetz und umgekehrt von dem Rechnernetz in das Telekommunikationsnetz realisiert. Vorteilhafterweise wird die Zuordnung der Kontaktierungsinformationen zueinander zur Weiterleitung der Nachrichten verwendet, wobei bei der Weiterleitung der Nachrichten dem beteiligten Nachrichtensender und/oder den beteiligten Nachrichtenempfängern die einen Nachrichtensofortversand in einem Verbund von Rechnernetzen wie dem Internet oder einem Intranet ermöglichende Kontaktierungsinformation des Nachrichtensenders und/oder des wenigstens eines Nachrichtenempfängers nicht mitgeteilt wird.

Eine weitere vorteilhafte Ausgestaltung der Erfindung sieht vor, dass die Zuordnung der Kontaktierungsinformationen zueinander durch eine vorzugsweise einmalig erfolgende logische Verknüpfung erzeugt wird, wobei die Kontaktierungsinformationen vorzugsweise von einem einzelnen Nutzer, das heißt einem Nachrichtensender oder einem Nachrichtenempfänger sind. Die Zuordnung der Kontaktierungsinformationen eines Nutzers zueinander ist dabei vorteilhafterweise für andere Nutzer nicht sichtbar. Ein Nutzer kann so erfindungsgemäß gleichzeitig mit einer Identität in dem Telekommunikationsnetz und mit einer Identität in dem Rechnernetz erreichbar sein, ohne dass anderen Nutzern die jeweils andere, das heißt weitere Identität des Nutzers angezeigt oder sonst wie bekannt wird.

Eine weitere vorteilhafte Ausgestaltung der Erfindung ist gekennzeichnet durch eine Weiterleitung der Nachrichten an die Kontaktierungsinformation des Nachrichtensenders und/oder des wenigstens einen Nachrichtenempfängers in dem Telekommunikationsnetz und an die einen Nachrichtensofortversand in einem Verbund von Rechnernetzen wie dem Internet oder einem Intranet ermöglichende Kontaktierungsinformation des Nachrichtensenders und/oder des wenigstens einen Nachrichtenempfängers. Erfindungsgemäß werden Nachrichten so in zweifacher Ausfertigung an den jeweiligen die einen Nachrichtensofortversand in einem Verbund von Rechnernetzen wie dem Internet oder einem Intranet ermöglichende Kennung nutzenden Nachrichtensender und/oder Nachrichtenempfänger übermittelt. Der jeweilige Nutzer kann sich so vorteilhafterweise seitens eines in dem Rechnernetz betreibbaren Endgerätes die Nachrichten zur Archivierung oder dergleichen Nutzungen erfassen lassen.

Eine bevorzugte Ausgestaltung der Erfindung ist gekennzeichnet durch eine Weiterleitung der Nachrichten an die einen Nachrichtensofortversand in einem Verbund von Rechnernetzen wie dem Internet oder einem Intranet ermöglichende Kontaktierungsinformation des Nachrichtensenders und/oder des wenigstens einen Nachrichtenempfängers bei Erreichbarkeit des jeweiligen Nachrichtensenders und/oder des jeweiligen Nachrichtenempfängers in dem Verbund von Rechnernetzen wie dem Internet oder einem Intranet.

Eine weitere vorteilhafte Ausgestaltung der Erfindung sieht vor, dass die einen Nachrichtensofortversand in einem Verbund von Rechnernetzen wie dem Internet oder einem Intranet ermöglichende Kontaktierungsinformation des Nachrichtensenders und/oder des wenigstens einen Nachrichtenempfängers eine eindeutige Kennung in dem Verbund von Rechnernetzen wie dem Internet oder einem Intranet ist. Eine bevorzugte Ausgestaltung der Erfindung ist gekennzeichnet durch die Nutzung von Kennungen gemäß einem Instant-Messaging-Protokoll.

Vorteilhafterweise erfolgt der Vergleich bezüglich der Gleichheit der Nachrichteninhalte unter Nutzung eines mathematischen Algorithmus, vorzugsweise ohne ein Auslesen des Nachrichteninhalts. Eine besonders bevorzugte Ausgestaltung der Erfindung sieht dabei die Bildung eines sogenannten Hash-Wertes mit einer Hash- beziehungsweise Streuwertfunktion, besonders bevorzugt über den Nachrichteninhalt und der Kontaktinformation, insbesondere der Rufnummer (MSISDN) des Nachrichtensenders unter Nutzung eines Hash-Algorithmus vor.

Eine vorteilhafte Ausgestaltung der Erfindung sieht vor, dass der Nachrichteninhalt mit der Gruppierungsinformation versehen wird. Eine bevorzugte Ausgestaltung der Erfindung ist dadurch gekennzeichnet, dass die Kontaktinformation des jeweiligen Nachrichtenempfängers mit der Gruppierungsinformation versehen wird. Das Versehen des Nachrichteninhalts und/oder der Kontaktinformation mit der Gruppierungsinformation macht vorteilhafterweise keine Veränderungen an dem Format und/oder dem Aufbau des Protokolls des für die Nachrichtenübermittlung vorgesehenen Nachrichtendienstes des Telekommunikationsnetzes erforderlich. Seitens des Telekommunikationsnetzwerkes ist vorteilhafterweise eine Einrichtung zur Identifizierung und/oder Extrahierung der Gruppeninformation aus dem entsprechend mit diesem versehenen Nachrichteninhalt und/oder der entsprechend mit dieser versehenen Kontaktinformation vorgesehen.

Eine vorteilhafte Ausgestaltung der Erfindung ist gekennzeichnet durch eine Nutzung der Gruppierungsinformation als Information zur Kontaktierung des Nachrichtensenders im Telekommunikationsnetz. Eine vorteilhafte Ausgestaltung der Erfindung ist gekennzeichnet durch eine Nutzung der Gruppierungsinformation von auf die Nachricht antwortenden Nachrichtenempfängern als Information zur Kontaktierung des Nachrichtensenders und/oder anderer Nachrichtenempfänger im Telekommunikationsnetz. Vorteilhafterweise ist die Gruppierungsinformation eine Rufnummer im Telekommunikationsnetz, vorzugsweise eine MSISDN (MSISDN: Mobile Subscriber ISDN; ISDN: Integrated Services Digital Network). Vorteilhafterweise wird eine entsprechende Rufnummer als Gruppierungsinformation für eine erfindungsgemäße Nachrichtenübermittlung mit Gruppenkommunikationsfunktionalität von dem Telekommunikationsnetzwerk bereitgestellt und in beziehungsweise mit diesem verwaltet.

Eine weitere vorteilhafte Ausgestaltung der Erfindung sieht eine Nutzung der Gruppierungsinformation zur Abrechnung von Nutzungen des Nachrichtendienstes des Telekommunikationsnetzes vor, vorzugsweise für eine gebührenreduzierte Abrechnung von Nutzungen des Nachrichtendienstes des Telekommunikationsnetzes. Vorteilhafterweise wird so ein weiterer Anreiz zur Nutzung einer erfindungsgemäßen Gruppenfunktionalität zur Übermittlung von Nachrichten in Telekommunikationsnetzen sowohl für entsprechende Dienstanbieter, insbesondere Provider wie Mobilfunknetzbetreiber, als auch den Nutzer des Dienstes.

Eine besonders bevorzugte Ausgestaltung der Erfindung ist gekennzeichnet durch einen vor der Erzeugung der Gruppierungsinformation zwischen dem Telekommunikationsnetzwerk und dem Nachrichtensender erfolgenden Dialog zur Aktivierung beziehungsweise Ablehnung der Gruppierung. Vorteilhafterweise erfolgt der Dialog mittels eines Nachrichtendienstes des Telekommunikationsnetzes. Vorteilhafterweise ist der Dialog telekommunikationsnetzseitig automatisiert ausgebildet und/oder initiiert. Eine konkrete Ausgestaltung der Erfindung sieht vor, dass das Telekommunikationsnetz nach erfindungsgemäßer Detektierung des Wunsches eines Nachrichtensender eine Gruppennachricht, also eine Nachricht eines Nachrichteninhaltes an wenigstens zwei unterschiedliche Nachrichtenempfänger, zu versenden dem Nachrichtensender mittels des Nachrichtendienstes eine Nachricht sendet, die dem Nachrichtensender mitteilt, dass das Versenden einer Gruppennachricht erkannt wurde und dem Nutzer zur Aktivierungsauswahl die Nutzung der erfindungsgemäßen Gruppenfunktionalität durch Bereitstellung einer Gruppierungsinformation anbietet. Auf die Aktivierungsauswahl kann der Nutzer dann vorteilhafterweise mit einer Antwortnachricht reagieren und die Gruppenfunktionalität für die Nachrichtenübermittlung aktivieren, vorzugsweise mit einer Nachricht an das Telekommunikationsnetz, welche vorteilhafterweise mit einem Nachrichtendienst an das Telekommunikationsnetz gesendet wird.

Eine bevorzugte Ausgestaltung der Erfindung ist gekennzeichnet durch einen Kurzmitteilungsdienst (SMS) als Nachrichtendienst des Telekommunikationsnetzes.

Eine weitere Ausgestaltung der Erfindung sieht die Nutzung eines in einem Telekommunikationsnetz betreibbaren Endgerätes, vorzugsweise in Form eines in einem Mobilfunknetz betreibbaren mobilen Endgerätes, seitens des Nachrichtensenders und/oder der Nachrichtenempfänger vor.

Zur technischen Lösung der eingangs genannten Aufgabe wird mit der vorliegenden Erfindung ferner ein Netzknoten in einem Telekommunikationsnetz, vorzugsweise einem Mobilfunknetz gemäß einem GSM-, GPRS- und/oder UMTS-Funknetzstandard, welcher an der Übermittlung von Nachrichten in dem Telekommunikationsnetz mittels eines Nachrichtendienstes des Telekommunikationsnetzes beteiligt ist und wenigstens eine Einheit zum Empfangen von einen Nachrichteninhalt und wenigstens eine Information zur Kontaktierung eines Nachrichtenempfängers in einem Telekommunikationsnetz aufweisenden Nachrichten aufweist, vorgeschlagen, welcher gekennzeichnet ist durch, wenigstens eine Einheit zur Erkennung, dass ein Nachrichtensender innerhalb einer vorgebbaren Dauer nacheinander wenigstens zwei Nachrichten an unterschiedliche Nachrichtenempfänger sendet, wenigstens eine Einheit zur Erfassung der Länge und/oder des Inhalts der Nachrichteninhalte der Nachrichten, wenigstens einer Einheit zum Vergleichen der Länge und/oder der Gleichheit der Nachrichteninhalte, wenigstens einer Einheit zum Erzeugen einer Information zur zumindest netzwerkseitigen Gruppierung des Nachrichtensenders und der Nachrichtenempfänger, bei identischer Länge und/oder Gleichheit der Nachrichteninhalte, einer Einheit zum Versehen der Nachrichten mit der Gruppierungsinformation und wenigstens einer Einheit zum Weiterleiten der Nachrichten unter Nutzung der Gruppierungsinformation und der Kontaktierungsinformation der jeweiligen Nachrichtenempfänger an die Nachrichtenempfänger.

Gegenstand der Erfindung ist ferner ein Netzknoten in einem Telekommunikationsnetz, vorzugsweise einem Mobilfunknetz gemäß einem GSM-, GPRS- und/oder UMTS-Funknetzstandard, welcher an der Übermittlung von Nachrichten in dem Telekommunikationsnetz mittels eines Nachrichtendienstes des Telekommunikationsnetzes beteiligt ist. Dabei ist der Netzknoten, ausgebildet und/oder eingerichtet, ein erfindungsgemäßes Verfahren auszuführen.

Vorteilhafterweise ist der erfindungsgemäße Netzknoten eine Vermittlungseinrichtung für den Nachrichtendienst des Telekommunikationsnetzes, vorzugsweise ein SMSC für die Übermittlung von Nachrichten mittels SMS. Eine weitere Ausgestaltung der Erfindung sieht vor, dass der Netzknoten eine Servereinrichtung für den Nachrichtendienst des Telekommunikationsnetzes ist beziehungsweise diese nutzend aufweist. Vorteilhafterweise ist die Recheneinrichtung von einem dem SMSC vorgeschalteten Netzknoten, welcher ausgebildet ist, die für die erfindungsgemäße Verfahrensführung zu filternden Information herauszufiltern und/oder zu verarbeiten. In einer weiteren Ausgestaltung übernimmt die Recheneinrichtung die Funktionen und/oder Aufgaben des SMSC.

Weitere Einzelheiten, Merkmale und Vorteile der Erfindung werden nachfolgend anhand der in den Figuren der Zeichnung dargestellten Ausführungsbeispiele der Erfindung näher erläutert. Dabei zeigen:
- Fig.1 1: in einer schematischen Prinzipdarstellung eine erfindungsgemäße Übermittlung von Nachrichten in einem Telekommunikationsnetz;
- Fig. 2: in einer schematischen Prinzipdarstellung ein Ausführungsbeispiel eines Dialogs zwischen einem Nachrichtensender und einem Telekommunikationsnetz zur Aktivierung einer erfindungsgemäßen Gruppenkommunikationsfunktionalität im Rahmen einer erfindungsgemäßen Nachrichtenübermittlung;
- Fig. 3: in einer schematischen Prinzipdarstellung ein Ausführungsbeispiel einer Nachrichtenübermittlung im Rahmen einer erfindungsgemäßen Nachrichtenübermittlung und
- Fig. 4: in einer schematischen Prinzipdarstellung ein Ausführungsbeispiel einer Nachrichtenübermittlung im Rahmen einer erfindungsgemäßen Nachrichtenübermittlung unter Einbeziehung eines Nachrichtensofortversandes in einem Verbund von Rechnernetzen.

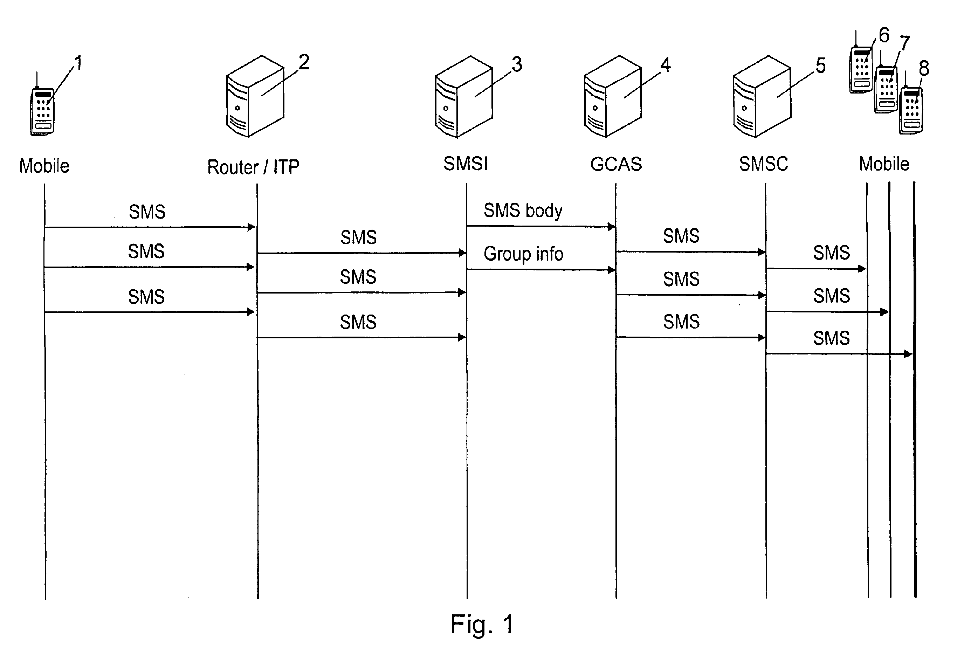

Fig. 1 zeigt das Endgerät 1 eines Nachrichtensenders 1 sowie Endgeräte 6, 7, und 8 von Nachrichtenempfängern 6, 7 und 8 in einem Telekommunikationsnetz 13, vorliegend einem Mobilfunknetz 13 gemäß einem GSM-, GPRS- und/oder UMTS-Funknetzstandard. Die Endgeräte 1, 6, 7 und 8 sind vorliegend in dem Mobilfunknetz 13 betreibbare mobile Endgeräte in Form von Mobilfunktelefonen. Ferner zeigt Fig. 1 seitens des Mobilfunknetzes 13 für die Übermittlung von Nachrichten in dem beziehungsweise über das Mobilfunknetz 13 vorgesehene und eingerichtete Einrichtungen 2, 3, 4 und 5 des Mobilfunknetzes 13, vorliegend einen Router/ITP 2, eine Recheneinrichtung 3, vorliegend SMSI genannt (SMSI: SMS Interception; SMS: Short Message Service), zur Detektierung einer Gruppennachricht, eine Recheneinrichtung 4, vorliegend GCSA genannt (GCAS: GroupCom Application Server), zur Erzeugung einer Gruppierungsinformation und Versehung des Inhalts einer zu übermittelnden Nachrichten mit der Gruppierungsinformation und einer Vermittlungseinrichtung SMSC 5. Die Einrichtungen 2, 3, 4 und 5 können dabei als separate Einrichtungen und/oder als eine Einrichtung von einer Recheneinrichtung realisiert beziehungsweise funktionalisiert sein.

Seitens des Mobilfunktelefons 1 eines Nachrichtensenders 1 wird in bekannter Art und Weise eine mittels eines Nachrichtendienstes des Mobilfunknetzes 13, vorliegend SMS, übermittelbare Nachricht erzeugt und über das Mobilfunknetz 13 an mehrere Nachrichtenempfänger 6, 7 und 8 beziehungsweise dessen Endgeräte 6, 7 und 8 gesendet. Die seitens des Mobilfunktelefons 1 des Nachrichtensenders 1 erzeugte Nachricht weist dabei für jeden Nachrichtenempfänger 6, 7 und 8 einen identischen Nachrichteninhalt und für jeden der Nachrichtenempfänger 6, 7 und 8 jeweils eine Information zur Kontaktierung des Nachrichtenempfänger 6, 7 beziehungsweise 8 in dem Mobilfunknetz 13 auf.

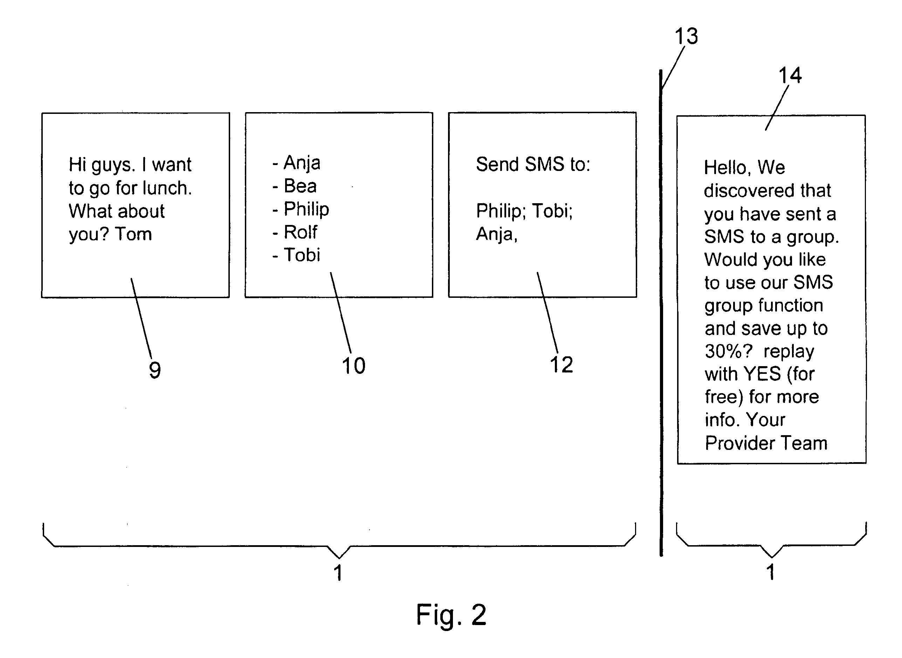

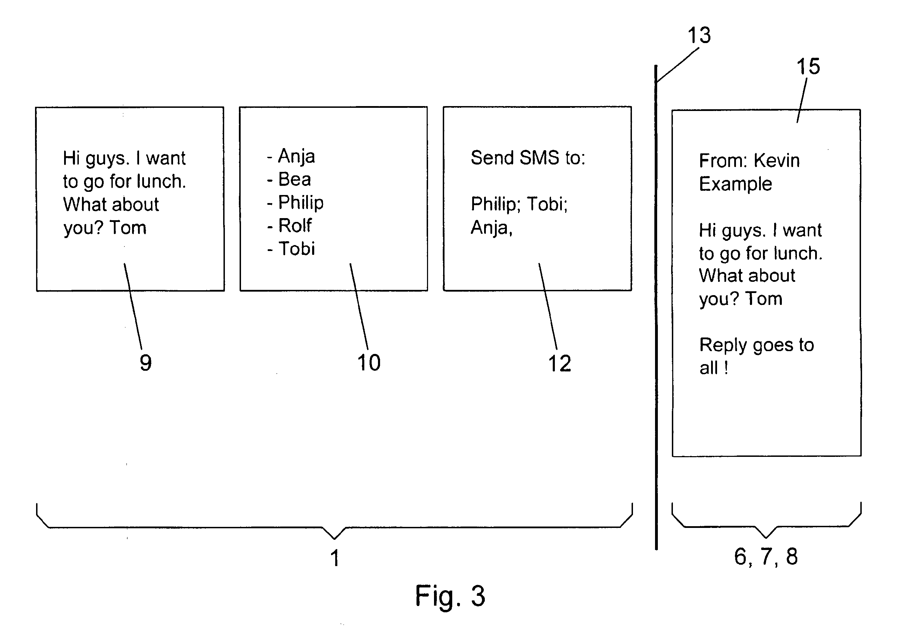

Fig. 2 und Fig. 3 zeigen ein Ausführungsbeispiel einer entsprechenden Nachrichtenerzeugung seitens des Mobilfunktelefons 1 eines Nachrichtensenders 1. Dabei wird seitens des Mobilfunktelefons 1 in Verfahrensschritt 9 mittels einer seitens des Mobilfunktelefons 1 ausgeführten Editoranwendung ein Nachrichteninhalt, vorliegend "Hi guys. I want to go for lunch. What about you? Tom", erzeugt. In Verfahrensschritt 10 werden aus einer seitens des Mobilfunktelefons 1 unterhaltenen Datenbank, vorliegend einem sogenannten PhoneBook, Kontaktinformationen möglicher Nachrichtenempfänger 6, 7 und 8, vorliegend deren Rufnummern (MSISDNs) im Mobilfunknetz 13 ausgewählt. Die aus Nachrichteninhalt und der Kontaktinformation der jeweiligen Nachrichtenempfänger 6, 7 und 8 bestehenden Nachrichten werden dann in Verfahrensschritt 12 von dem Mobilfunktelefon 1 an die jeweiligen Nachrichtenempfänger 6, 7 und 8, vorliegend "Philip", "Tom" und "Anja" gesendet. Dabei übermittelt das Mobilfunktelefon 1 die Nachrichten an das Mobilfunknetz 13.

Fig. 1 zeigt die Übermittlung der Nachrichten an die jeweiligen Nachrichtenempfänger 6, 7 und 8. Dabei sendet der Nachrichtensender 1 die Nachrichten von seinem Mobilfunktelefon 1 aus mittels des Nachrichtendienstes, vorliegend mittels SMS, an das Mobilfunknetz 13, vorliegend exemplarisch an den Router (ITP) 2 des Mobilfunknetzes 13.

Seitens des Routers/ITP 2 des Mobilfunknetzes 13 werden die Nachrichten an die Nachrichtenempfänger 6, 7 und 8 im Rahmen der Nachrichtenübermittlung im Mobilfunknetz 13 an die Recheneinrichtung 3 (SMSI) zur Detektierung einer Gruppennachricht übermittelt. Seitens der Recheneinrichtung 3 (SMSI) wird anhand der empfangenen Nachrichten erkannt wird, dass der Nachrichtensender 1 vorliegend innerhalb einer vorgebbaren Dauer nacheinander drei Nachrichten an unterschiedliche Nachrichtenempfänger 6, 7 und 8 sendet. Die Recheneinrichtung 3 (SMSI) erfasst dann die Länge und/oder den Inhalt der Nachrichteninhalte der Nachrichten. Bei identischer Länge und/oder Gleichheit der Nachrichteninhalte der Nachrichten erzeugt dann eine Recheneinrichtung 4 (GCAS) eine Information zur zumindest netzwerkseitigen Gruppierung des Nachrichtensenders 1 und der Nachrichtenempfänger 6, 7 und 8. Anschließend versieht die Recheneinrichtung 4 (GCAS) die Nachrichten mit der Gruppierungsinformation.

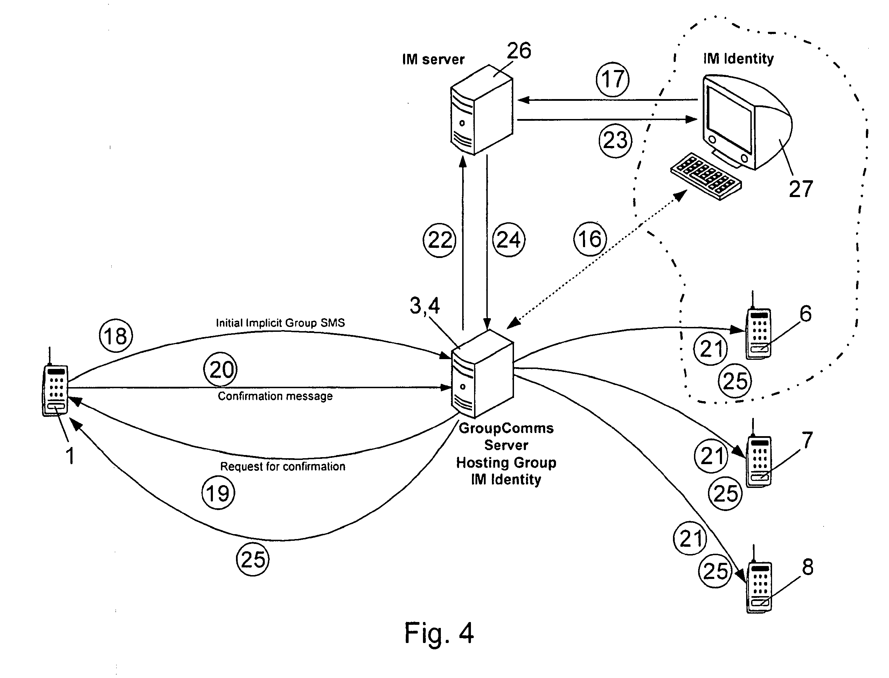

Der Gruppierungsinformation werden dabei, wie im Zusammenhang mit Fig. 4 noch näher erläutert, die Kontaktierungsinformationen der jeweiligen Nachrichtenempfänger 6, 7, 8 in dem Mobilfunknetz 13 als auch die einen Nachrichtensofortversand in einem Verbund von Rechnernetzen wie dem Internet oder einem Intranet ermöglichenden Kontaktierungsinformationen der jeweiligen Nachrichtensender und/oder Nachrichtenempfänger in einem Verbund von Rechnernetzen wie dem Internet oder einem Intranet zugeordnet.

Die mit der Gruppierungsinformation versehenen Nachrichten werden unter Nutzung der Gruppierungsinformation und der Kontaktierungsinformation der jeweiligen Nachrichtenempfänger 6, 7 und 8 von der Recheneinrichtung 4 (GCAS) an die für die Nachrichtenübermittlung mittels des Nachrichtendienstes SMS im Mobilfunknetz 13 vorgesehene und eingerichtete Vermittlungseinrichtung 5 des Mobilfunknetzes 13, vorliegend ein SMSC 5, übermittelt. Von dem SMSC 5 des Mobilfunknetzes 13 werden die Nachrichten dann mit der Gruppierungsinformation an die Mobilfunktelefone 6, 7 und 8 der Nachrichtenempfänger 6, 7 und 8 weitergeleitet.

Die Gruppierungsinformation ist vorliegend eine Rufnummer MSISDN im Mobilfunknetz 13, welche das Mobilfunknetz 13 zur Verfügung stellt und die von auf die Nachricht antwortenden Nachrichtenempfängern 6, 7 oder 8 als zur Kontaktierung des Nachrichtensenders 1 und/oder anderer Nachrichtenempfänger 6, 7 oder 8 im Mobilfunknetz 13 nutzbar ist. Vorteilhafterweise ist ferner wenigstens ein Teil der Individualinformation eines Nachrichtenempfängers 6, 7, 8 und/oder des Nachrichtensenders 1 als Kontaktierungsinformation des Nachrichtenempfängers 6, 7, 8 und des Nachrichtensenders 1 nutzbar, insbesondere nach Erfassung der Individualinformationen von Nachrichtenempfängern 6, 7, 8 beziehungsweise des Nachrichtensenders 1 entsprechend den in den Figuren dargestellten Dialogen zur Erfassung von Individualinformationen der jeweiligen Nachrichtenempfänger 6, 7, 8 beziehungsweise des Nachrichtensenders 1. Die Rufnummer der Gruppierungsinformation wird dabei, wie im Zusammenhang mit Fig. 4 noch näher erläutert, seitens des Mobilfunknetzes 13 zur Einrichtung einer Konferenzschaltung zwischen den Gruppenmitgliedern, also dem jeweiligen Nachrichtensender und/oder den jeweiligen Nachrichtenempfängern genutzt.

Die Nachrichtenübermittlung unter Nutzung der Gruppierungsinformation bewirkt dabei vorliegend eine gebührenreduzierte Abrechnung von Nutzungen des Nachrichtendienstes SMS des Mobilfunknetzes 13. Vorteilhafterweise wird dabei mit und/oder durch die Nutzung der Gruppierungsinformation eine entsprechende Abrechnungsinformation in dem sogenannten CDR (CDR: Call Detail Record) des Mobilfunknetzes 13 für die Rufnummern (MSISDNs) der beteiligten Gruppenkommunikationspartner 1, 6, 7 und 8 gesetzt beziehungsweise aktiviert.

Fig. 2 zeigt einen Dialog zwischen dem Mobilfunktelefon 1 und dem Mobilfunknetz 13 zur Aktivierung der Gruppenkommunikationsfunktionalität. Dabei sendet das Mobilfunknetz 13 an das Mobilfunktelefon 1 bei mobilfunknetzseitiger Detektierung einer zu übermittelnden Gruppennachricht durch die Recheneinrichtung 3 (SMSI) des Mobilfunknetzes 13 automatisch eine Nachricht, vorliegend "Hello. We discovered that you have sent a SMS to a group. Would you like to use ors SMS group function and save up to 30%? Replay with YES (for free) for more info. Your Provider Team", an das Mobilfunktelefon 1 zur Aktivierungsauswahl, wie in Fig. 2 durch den mit 14 gekennzeichneten Verfahrensschritt dargestellt.

Fig. 3 zeigt in Verfahrensschritt 15 den Empfang der mit der Gruppierungsinformation versehenen übermittelten Nachricht des Nachrichtensenders 1 ("Kevin"), vorliegend "From Kevin Example Hi guys. I want to go for lunch. What about you? Tom Reply goes to all!" seitens der jeweiligen Nachrichtenempfänger 6, 7 und 8. Auf die Nachricht können die Nachrichtenempfänger 6, 7 und 8 unter Nutzung der Gruppierungsinformation an die Kommunikationspartner, also dem Nachrichtensender 1 und den Nachrichtenempfängern 6, 7 oder 8, antworten und die so von dem Mobilfunknetz 13 angebotene Gruppierungsfunktionalität nutzen.

Die erfindungsgemäße Gruppierung ist vorliegend über zwei unterschiedliche Prozesse einleitbar. Zum einen wird bei einem Versenden einer Nachricht mittels des Nachrichtendienstes des Mobilfunknetzes 13, vorliegend einer SMS-Nachricht, an verschiedene Nachrichtenempfänger von einer netzwerkseitig in die Nachrichtenübermittlung dazwischen geschaltete Recheneinrichtung, vorliegend vorzugsweise einem Server, erkannt, dass es sich hierbei um eine an eine Gruppe gerichtete Nachricht (SMS) handelt. Die Nummern der Nachrichtenempfänger und des Nachrichtensenders werden automatisch zusammengefasst und zu einer Gruppe ausgebildet, wobei die Gruppe zur eindeutigen Identifizierung eine als Gruppierungsinformation genutzte Mobilfunkrufnummer, eine sogenannte Gruppenrufnummer, erhält. Mittels dieser Mobilfunkrufnummer (Gruppenrufnummer) ist dann eine eindeutige Zuordnung zu den Gruppenmitgliedern ermöglicht. Neben einer automatischen Gruppeninitiierung via SMS ist es ferner ermöglicht, eine Gruppe mit Hilfe eines Computerprogramms, welches Zugriff auf den Gruppenserver gestattet, zu bilden. Im Rahmen dieser Gruppierungsmöglichkeit können äußerst komfortabel Gruppenmitglieder mit ihren Mobilfunknummern eingegeben und unter einem Stichwort für eine spätere Verwendung gespeichert werden.

Fig. 4 zeigt die im Zusammenhang mit Fig. 1, Fig. 2 und Fig. 3 näher erläuterte Nachrichtenübermittlung im Zusammenhang mit einer erfindungsgemäßen Zuordnung und Nutzung von einen Nachrichtensofortversand in einem Verbund von Rechnernetzen wie dem Internet oder einem Intranet ermöglichenden Kontaktierungsinformationen der jeweiligen Nachrichtensender und/oder Nachrichtenempfänger in einem Verbund von Rechnernetzen wie dem Internet oder einem Intranet.

In Verfahrensschritt 18 wird anhand der seitens der Recheneinrichtungen 3, 4 des Telekommunikationsnetzes 13 von dem Nachrichtensender 1 empfangenen Nachrichten erkannt, dass der Nachrichtensender 1 innerhalb einer vorgebbaren Dauer nacheinander eine Nachricht mit identischer Länge und/oder gleichem Nachrichteninhalt an drei Nachrichtenempfänger 6, 7 und 8 senden möchte. In Verfahrensschritt 19 sendet die Recheneinrichtung 3 beziehungsweise 4 über das Telekommunikationsnetz 13 eine Nachricht an den Nachrichtensender 1 mit dem Hinweis das die Möglichkeit einer Gruppennachrichtenversendung detektiert wurde und bittet um Bestätigung beziehungsweise Aktivierungsauswahl bezüglich einer erfindungsgemäßen Gruppierung. In Verfahrensschritt 20 sendet der Nachrichtensender 1 eine entsprechende Aktivierungsauswahl für eine erfindungsgemäße Gruppennachrichtenversendung über das Telekommunikationsnetz 13 an die Recheneinrichtung 3 beziehungsweise 4.

Für den in Fig. 4 mit dem Bezugszeichen 27 gekennzeichneten Nachrichtenempfänger 27, vorliegend ein ein in einem Verbund von Rechnernetzen wie dem Internet oder einem Intranet betreibbares Endgerät 27 in Form eines Rechners 27 nutzender Nachrichtenempfänger 27, ist über eine Recheneinrichtung 26, vorliegend einem einen Nachrichtensofortversand realisierenden beziehungsweise an einem Nachrichtensofortversand beteiligten Server (IM-Server) 26, der einen Nachrichtensofortversand in dem Verbund von Rechnernetzen wie dem Internet oder einem Intranet ermöglichenden Kontaktierungsinformation des Nachrichtenempfängers 27 eine Information zur Kontaktierung des Nachrichtenempfängers 27 in dem beziehungsweise über das Telekommunikationsnetz 13 zugeordnet. Die Zuordnung bewirkt vorliegend, dass der Nachrichtenempfänger 27 Nachrichten unter einer Rufnummer (MSISDN) des Telekommunikationsnetzes 13 im Rechnernetz empfangen kann beziehungsweise Nachrichten unter der Rufnummer (MSISDN) aus dem Rechnernetz über das Telekommunikationsnetz 13 an Nachrichtenempfänger senden kann. Die jeweils netzseitige Zuordnung der Kontaktierungsinformationen, also der Kontaktierungsinformation des Nachrichtenempfängers 27 im Rechnernetz einerseits und im Telekommunikationsnetz 13 andererseits erfolgt dabei über eine entsprechende Nachrichtenübermittlung zwischen den Einrichtungen 3, 4, 26 und 27 über die in Fig. 4 symbolisch dargestellten Verfahrensschritte 16, 17, 22, 23 und 24.

Vorliegend sind der Nachrichtenempfänger beziehungsweise -sender 27 in dem Rechnernetz und der Nachrichtenempfänger beziehungsweise -sender 6 in dem Mobilfunknetz 13 ein Nutzer, welcher somit zwei Identitäten aufweist, nämlich eine in dem Rechnernetz als Nachrichtenempfänger beziehungsweise - sender 27 und eine in dem Mobilfunknetz als Nachrichtenempfänger beziehungsweise -sender 6. Die Zusammengehörigkeit der Identitäten 6 und 27 für einen Nutzer ist in Fig. 4 durch die strichpunktierte Umrandung der Endgeräte 6 und 27 symbolisch dargestellt. Die jeweiligen Identitäten des Nutzers 6, 27 sind dabei für andere Nutzer nicht sichtbar, das heißt, dass vorliegend beispielsweise die Identität 27 des Nutzers 6, 27 anderen nicht angezeigt wird. Die Recheneinrichtung 3 beziehungsweise 4 erzeugt dabei erfindungsgemäß einmalig eine logische Verknüpfung zwischen den Identitäten des Nutzers in dem Rechnernetz (Nachrichtenempfänger beziehungsweise - sender 27) und dem Mobilfunknetz 13 (Nachrichtenempfänger beziehungsweise -sender 6). Die Recheneinrichtung 3 beziehungsweise 4 meldet dann unter Nutzung der Verknüpfung und/oder der Identität 6 des Nutzers bei der Recheneinrichtung 26, vorliegend einem sogenannten IM-Server, die Identität 27 des Nutzers an (in Fig. 4 symbolisch durch den mit Verfahrensschritt 16 gekennzeichneten Pfeil dargestellt). Wenn dann der Nutzer mit seiner Identität 27 in dem Rechnernetz erreichbar - das heißt online - ist, erhält dieser an ihn gerichtete Nachrichten sowohl auf seinem Endgerät 6 unter der entsprechenden Identität 6 im Mobilfunknetz 13 als auch auf seinem Endgerät 27 unter der entsprechenden Identität 27 (IM Identity) in dem Rechnernetz. Die Recheneinrichtung 3 beziehungsweise 4 - und vorliegend vorteilhafterweise nur diese - weiß dann, in welcher Gruppe beziehungsweise Gruppen der Nutzer ist und wie dieser mit welcher Paarung beziehungsweise Zuordnung jeweilig im Mobilfunknetz 13 und/oder im Rechnernetz erreichbar ist.

In Verfahrensschritt 17 wird der Nachrichtenempfänger 27 für den von der Recheneinrichtung 26 realisierten Nachrichtensofortversanddienst (IM-Service) seitens der Recheneinrichtung 26 registriert. Dabei wird dem Nachrichtenempfänger 27 für den Nachrichtensofortversanddienst eine Kontaktierungsinformation zur Nutzung in dem Rechnernetz eingerichtet. Weiter wird der einen Nachrichtensofortversand in einem Verbund von Rechnernetzen wie dem Internet oder einem Intranet ermöglichenden Kontaktierungsinformation des Nachrichtenempfängers 27 seitens der Recheneinrichtung 26 und/oder seitens der Recheneinrichtungen 3 und/oder 4 eine zur Nutzung im Telekommunikationsnetz 13 dienende Information zur Kontaktierung im Telekommunikationsnetz 13 zugeordnet, vorliegend eine Rufnummer MSISDN des Telekommunikationsnetzes 13. Seitens des Telekommunikationsnetzes ist die Rufnummer (MSISDN) dann als Kontaktierungsinformation für den Nachrichtenempfänger nutzbar. Die Nutzung der Rufnummer (MSISDN) als Kontaktierungsinformation für den Nachrichtenempfänger 27 ist dabei sowohl bei einer Weiterleitung von Nachrichten an den Nachrichtenempfänger 27 als auch für eine Versendung von Nachrichten von dem Nachrichtenempfänger 27 genutzt. In Fig. 4 sind der Empfang von Nachrichten seitens des Nachrichtenempfängers 27 als auch das Versenden von Nachrichten durch den Nachrichtenempfänger 27 symbolisch durch den mit dem Bezugszeichen 16 gekennzeichneten Doppelpfeil dargestellt. Der Nachrichtenempfang seitens des Nachrichtenempfängers 27 als auch die Nachrichtenversendung von dem Nachrichtenempfänger 27 erfolgen dabei jeweils über die Recheneinrichtungen 3, 4 und 26.

Vorliegend erfolgt eine erfindungsgemäße Nachrichtenübermittlung an den Nachrichtenempfänger 27 nur dann, wenn der Nachrichtenempfänger 27 im Rechnernetz erreichbar ist. Die Erreichbarkeit des Nachrichtenempfängers 27 wird dabei vorteilhafterweise in Verfahrensschritt 17 mit der Registrierung des Nachrichtenempfängers 27 erfasst.

Im Rahmen einer erfindungsgemäßen Nachrichtenübermittlung von dem Nachrichtensender 1 an die Nachrichtenempfänger 6, 7, 8 und 27 wird von seitens der Recheneinrichtung 3 beziehungsweise 4 in Verfahrensschritt 22 unter Nutzung der Kontaktierungsinformation des Nachrichtenempfängers 27 im Telekommunikationsnetz 13 der Recheneinrichtung 26 im Rechnernetz die den seitens des Telekommunikationsnetzes 13 gruppierten Nachrichtenempfängern 6, 7, 8 und 27 zugeordnete Gruppierungsinformation mitgeteilt. Die Gruppierungsinformation wird dann in Verfahrensschritt 23 von der Recheneinrichtung 26 dem Nachrichtenempfänger 27 im Rechnernetz mitgeteilt. Die Gruppierungsinformation ist dann für eine weiter erfolgende Nachrichtenübermittlung zwischen den Gruppenmitgliedern 1, 6, 7, 8 und 27 nutzbar.

In Verfahrensschritt 24 wird der der Recheneinrichtung 3 beziehungsweise 4 die Erreichbarkeit des Nachrichtenempfängers 27 im Rechnernetz signalisiert. Die Erreichbarkeit des Nachrichtenempfängers 27 im Rechnernetz wird dabei vorliegend im Zusammenhang mit der Registrierung des Nachrichtenempfängers 27 seitens der Recheneinrichtung 26 in Verfahrensschritt 17 erfasst. Eine Nachrichtenübermittlung an den Nachrichtenempfänger 27 erfolgt vorliegend nur dann, wenn dieser im Rechnernetz erreichbar ist.

Der Gruppierungsinformation werden die Kontaktierungsinformationen der jeweiligen Nachrichtenempfänger 6, 7, 8 und 27 im Telekommunikationsnetz 13 zugeordnet. Die Gruppierungsinformation wird dann im Rahmen der Nachrichtenübermittlung an die Nachrichtenempfänger als Kontaktierungsinformation verwendet. Dabei werden Nachrichten von dem Nachrichtensender 1 an die Nachrichtenempfänger 6, 7 und 8 (Verfahrensschritt 21) sowie den Nachrichtenempfänger 27 (Verfahrensschritt 16) gesendet beziehungsweise im Verlauf einer weiteren Nachrichtenübermittlung als Antworten von Nachrichtenempfängern und/oder dem Nachrichtensender auf die Nachrichtenübermittlung des Nachrichtensenders 1 empfangen (Verfahrensschritt 25).

Die in den Figuren der Zeichnung dargestellten und in Zusammenhang mit diesen beschriebenen Ausführungsbeispiele der Erfindung dienen lediglich der Erläuterung der Erfindung und sind für diese nicht beschränkend.

### Bezugszeichenliste:

- 1: Nachrichtensender/Endgerät
- 2: Telekommunikationsnetz/Router (ITP)
- 3: Telekommunikationsnetz/SMSI
- 4: Telekommunikationsnetz/GCAS
- 5: Telekommunikationsnetz/SMSC
- 6: Nachrichtenempfänger/Endgerät
- 7: Nachrichtenempfänger/Endgerät
- 8: Nachrichtenempfänger/Endgerät
- 9: Verfahrensschritt/Editieren Nachrichteninhalt
- 10: Verfahrensschritt/Auswahl Nachrichtenempfänger
- 12: Verfahrensschritt/Nachrichtenübermittlung
- 13: Telekommunikationsnetz
- 14: Verfahrensschritt/Dialog (Einladung zur Gruppenfunktionalität)
- 15: Verfahrensschritt/Nachrichtenempfang
- 16: Verfahrensschritt (Nachrichtenempfang/Nachrichtenversendung)
- 17: Verfahrensschritt (Registrierung und Nachrichtenübermittlung Nachrichtenempfänger 27)
- 18: Verfahrensschritt Initiierung Gruppennachricht (Initial Implicit Group SMS)
- 19: Verfahrensschritt Anforderung Bestätigung Gruppennachricht (Request for Confirmation)
- 20: Verfahrensschritt Bestätigung Gruppennachricht (Confirmation Message)
- 21: Verfahrensschritt/Nachrichtenübermittlung (Nachrichtenempfänger 6, 7 und 8)
- 22: Verfahrensschritt/Nachrichtenübermittlung (Nachrichtenempfänger 27)
- 23: Verfahrensschritt/Nachrichtenübermittlung (Nachrichtenempfänger 27)
- 24: Verfahrensschritt/Nachrichtenübermittlung (Nachrichtenempfänger 27)
- 25: Verfahrensschritt/Nachrichtenübermittlung (Nachrichtensender 1 und Nachrichtenempfänger 6, 7 und 8)
- 26: Recheneinrichtung/IM-Server
- 27: Nachrichtenempfänger/Endgerät

## Patentansprüche

1. Verfahren zur Übermittlung von Nachrichten in Telekommunikationsnetzen (13),
vorzugsweise Mobilfunknetzen (13) gemäß einem GSM-, GPRS- und/oder UMTS-Funknetzstandard,
mittels eines Nachrichtendienstes eines Telekommunikationsnetzes (13), wobei
seitens wenigstens eines
an der Nachrichtenübermittlung beteiligten Netzknotens des Telekommunikationsnetzes (13)
für jeden Nachrichtenempfänger (6, 7, 8, 27) einer
einen Nachrichteninhalt und
wenigstens eine Information zur Kontaktierung des Nachrichtenempfängers (6, 7, 8, 27) in einem Telekommunikationsnetz (13) aufweisende Nachricht
empfangen wird,
**dadurch gekennzeichnet,**
**dass**
seitens des Netzknotens anhand der empfangenen Nachrichten erkannt wird, dass ein Nachrichtensender (1) innerhalb einer vorgebbaren Dauer nacheinander wenigstens zwei Nachrichten an unterschiedliche Nachrichtenempfänger (6, 7, 8, 27) sendet,
die Länge und/oder der Inhalt der Nachrichteninhalte der Nachrichten erfasst wird,
bei identischer Länge und/oder Gleichheit der Nachrichteninhalte eine Information zur zumindest netzwerkseitigen Gruppierung des Nachrichtensenders (1) und der Nachrichtenempfänger (6, 7, 8, 27) erzeugt wird,
die Nachrichten mit der Gruppierungsinformation versehen werden und die Nachrichten unter Nutzung der Gruppierungsinformation und der Kontaktierungsinformation der jeweiligen Nachrichtenempfänger (6, 7, 8, 27) an die Nachrichtenempfänger (6, 7, 8, 27) weitergeleitet werden, wobei
die Kontaktierungsinformation des Nachrichtensenders (1) und/oder wenigstens eines Nachrichtenempfängers (6, 7, 8, 27) einen Nachrichtensofortversand in einem Verbund von Rechnernetzen wie dem Internet oder einem Intranet ermöglicht.

2. Verfahren nach Anspruch 1, **dadurch gekennzeichnet, dass** der einen Nachrichtensofortversand in einem Verbund von Rechnernetzen wie dem Internet oder einem Intranet ermöglichenden Kontaktierungsinformation des Nachrichtensenders (1) und/oder des wenigstens einen Nachrichtenempfängers (6, 7, 8, 27) eine Information zur Kontaktierung des Nachrichtensenders (1) oder des jeweiligen Nachrichtenempfängers (6, 7, 8, 27) in dem Telekommunikationsnetz (13) zugeordnet wird.

3. Verfahren nach Anspruch 2, **dadurch gekennzeichnet, dass** die Zuordnung der Kontaktierungsinformationen zueinander zur Weiterleitung der Nachrichten verwendet wird, wobei bei der Weiterleitung der Nachrichten dem beteiligten Nachrichtensender (1) und/oder den beteiligten Nachrichtenempfängern (6, 7, 8, 27) die einen Nachrichtensofortversand in einem Verbund von Rechnernetzen wie dem Internet oder einem Intranet ermöglichende Kontaktierungsinformation des Nachrichtensenders (1) und/oder des wenigstens eines Nachrichtenempfängers (6, 7, 8, 27) nicht mitgeteilt wird.

4. Verfahren nach Anspruch 2 oder Anspruch 3, **dadurch gekennzeichnet, dass** die Zuordnung der Kontaktierungsinformationen zueinander durch eine vorzugsweise einmalig erfolgende logische Verknüpfung erzeugt wird, wobei die Kontaktierungsinformationen vorzugsweise von einem einzelnen Nutzer (Nachrichtensender (1) oder Nachrichtenempfänger (6, 7, 8, 27)) sind.

5. Verfahren nach einem der Ansprüche 2 bis 4, **dadurch gekennzeichnet, dass** die Zuordnung der Kontaktierungsinformationen eines Nutzers (Nachrichtensender (1) oder Nachrichtenempfänger (6, 7, 8, 27)) zueinander für andere Nutzer (Nachrichtensender (1) oder Nachrichtenempfänger (6, 7, 8, 27)) nicht sichtbar ist.

6. Verfahren nach einem der Ansprüche 1 bis 5, **gekennzeichnet durch** eine Weiterleitung der Nachrichten an die Kontaktierungsinformation des Nachrichtensenders (1) und/oder des wenigstens einen Nachrichtenempfängers (6, 7, 8, 27) in dem Telekommunikationsnetz (13) und an die einen Nachrichtensofortversand in einem Verbund von Rechnernetzen wie dem Internet oder einem Intranet ermöglichende Kontaktierungsinformation des Nachrichtensenders (1) und/oder des wenigstens einen Nachrichtenempfängers (6, 7, 8, 27).

7. Verfahren nach einem der Ansprüche 1 bis 6, **gekennzeichnet durch** eine Weiterleitung der Nachrichten an die einen Nachrichtensofortversand in einem Verbund von Rechnernetzen wie dem Internet oder einem Intranet ermöglichende Kontaktierungsinformation des Nachrichtensenders (1) und/oder des wenigstens einen Nachrichtenempfängers (6, 7, 8, 27) bei Erreichbarkeit des jeweiligen Nachrichtensenders (1) und/oder des jeweiligen Nachrichtenempfängers (6, 7, 8, 27) in dem Verbund von Rechnernetzen wie dem Internet oder einem Intranet.

8. Verfahren nach einem der Ansprüche 1 bis 7, **dadurch gekennzeichnet, dass** die einen Nachrichtensofortversand in einem Verbund von Rechnernetzen wie dem Internet oder einem Intranet ermöglichende Kontaktierungsinformation des Nachrichtensenders (1) und/oder des wenigstens einen Nachrichtenempfängers (6, 7, 8, 27) eine eindeutige Kennung in dem Verbund von Rechnernetzen wie dem Internet oder einem Intranet ist.

9. Verfahren nach einem der Ansprüche 1 bis 8, **dadurch gekennzeichnet, dass** der Nachrichteninhalt mit der Gruppierungsinformation versehen wird.

10. Verfahren nach einem der Ansprüche 1 bis 9, **dadurch gekennzeichnet, dass** die Kontaktierungsinformation des jeweiligen Nachrichtenempfängers (6, 7, 8, 27) mit der Gruppierungsinformation versehen wird.

11. Verfahren nach einem der Ansprüche 1 bis 9, **gekennzeichnet durch** eine Nutzung der Gruppierungsinformation als Information zur Kontaktierung des Nachrichtensenders (1) im Telekommunikationsnetz (13).

12. Verfahren nach einem der Ansprüche 1 bis 11, **gekennzeichnet durch** eine Nutzung der Gruppierungsinformation von auf die Nachricht antwortenden Nachrichtenempfängern (6, 7, 8, 27) als Information zur Kontaktierung des Nachrichtensenders (1) und/oder anderer Nachrichtenempfänger (6, 7, 8, 27) im Telekommunikationsnetz (13).

13. Verfahren nach einem der Ansprüche 1 bis 12, **dadurch gekennzeichnet, dass** die Gruppierungsinformation eine Rufnummer (MSISDN) im Telekommunikationsnetz (13) ist.

14. Verfahren nach einem der Ansprüche 1 bis 13, **gekennzeichnet durch** eine Nutzung der Gruppierungsinformation zur Abrechnung von Nutzungen des Nachrichtendienstes des Telekommunikationsnetzes (13), vorzugsweise für eine gebührenreduzierte Abrechnung von Nutzungen des Nachrichtendienstes des Telekommunikationsnetzes (13).

15. Verfahren nach einem der Ansprüche 1 bis 14, **gekennzeichnet durch** einen vor der Erzeugung der Gruppierungsinformation zwischen dem Telekommunikationsnetzwerk (13) und dem Nachrichtensender (1) erfolgenden Dialog zur Aktivierung beziehungsweise Ablehnung der Gruppierung.

16. Verfahren nach Anspruch 15, **dadurch gekennzeichnet, dass** der Dialog mittels eines Nachrichtendienstes des Telekommunikationsnetzes (13) erfolgt.

17. Verfahren nach einem der Ansprüche 1 bis 16, **gekennzeichnet, durch** einen Kurzmitteilungsdienst (SMS) als Nachrichtendienst des Telekommunikationsnetzes (13).

18. Verfahren nach einem der Ansprüche 1 bis 17, **gekennzeichnet durch** die Nutzung eines in einem Telekommunikationsnetz (13) betreibbaren Endgerätes (1, 6, 7, 8, 27), vorzugsweise in Form eines in einem Mobilfunknetz (13) betreibbaren mobilen Endgerätes (1, 6, 7, 8, 27), seitens des Nachrichtensenders (1) und/oder der Nachrichtenempfänger (6, 7, 8, 27).

19. Netzknoten in einem Telekommunikationsnetz (13), vorzugsweise einem Mobilfunknetz (13) gemäß einem GSM-, GPRS- und/oder UMTS-Funknetzstandard,
welcher
an der Übermittlung von Nachrichten in dem Telekommunikationsnetz (13) mittels eines Nachrichtendienstes des Telekommunikationsnetzes (13) beteiligt ist,
**dadurch gekennzeichnet, dass**
dieser ausgebildet und/oder eingerichtet ist, ein Verfahren nach einem der Ansprüche 1 bis 18 auszuführen.

20. Netzknoten nach Anspruch 19,
**gekennzeichnet durch**
wenigstens eine Einheit zum Empfangen von einen Nachrichteninhalt und
wenigstens eine Information zur Kontaktierung eines Nachrichtenempfängers in einem Telekommunikationsnetz (13) aufweisenden
Nachrichten,
wenigstens eine Einheit zur Erkennung, dass ein Nachrichtensender (1) innerhalb einer vorgebbaren Dauer nacheinander wenigstens zwei Nachrichten an unterschiedliche Nachrichtenempfänger (6, 7, 8, 27) sendet,
wenigstens eine Einheit zur Erfassung der Länge und/oder des Inhalts der Nachrichteninhalte der Nachrichten,
wenigstens eine Einheit zum Vergleichen der Länge und/oder der Gleichheit der Nachrichteninhalte,
wenigstens eine Einheit zum Erzeugen einer Information zur zumindest netzwerkseitigen Gruppierung des Nachrichtensenders (1) und der Nachrichtenempfänger (6, 7, 8, 27), bei identischer Länge und/oder Gleichheit der Nachrichteninhalte,
eine Einheit zum Versehen der Nachrichten mit der Gruppierungsinformation und
wenigstens eine/ Einheit zum Weiterleiten der Nachrichten unter Nutzung der Gruppierungsinformation und der Kontaktierungsinformation der jeweiligen Nachrichtenempfänger (6, 7, 8, 27) an die Nachrichtenempfänger (6, 7, 8, 27).

21. Netzknoten nach Anspruch 19 oder Anspruch 20, **dadurch gekennzeichnet, dass** dieser eine Vermittlungseinrichtung (SMSC) für den Nachrichtendienst des Telekommunikationsnetzes (13) ist.

22. Netzknoten nach einem der Ansprüche 19 bis 21, **dadurch gekennzeichnet, dass** dieser eine Servereinrichtung für den Nachrichtendienst des Telekommunikationsnetzes (13) ist.

## Claims

1. A method for the transmission of messages in telecommunication networks (13),
preferably mobile radio networks (13) according to a GSM, GPRS and/or UMTS radio network standard,
by means of a message service of a telecommunication network (13). wherein
a message comprising a message content and
at least one information item for contacting the message receiver (6, 7, 8, 27) in a telecommunication network (13)
is received
for each message receiver (6, 7, 8, 27)
by means of at least one
network node of the telecommunication network (13) which is involved in the message transmission,
**characterized in**
**that**
the network node detects on the base of the received messages that a message sender (1) sends at least two messages successively to different message receivers (6, 7, 8, 27) within a predeterminable period of time,
the length and/or the content of the message contents of the messages is detected,
in case of an identical length and/or an identity of the message contents,
an information item for at least grouping the message sender (1) and the message receivers (6, 7, 8, 27) by the network is generated,
the messages are provided with the grouping information item and
the messages are transmitted to the message receivers (6, 7, 8, 27) using the grouping information item and the contacting information item of the respective message receivers (6, 7, 8, 27),
wherein
the contacting information item of the message sender (1) and/or at least one message receiver (6, 7, 8, 27) allows an instant messaging in a compound structure of computer networks, such as the internet or an intranet.

2. A method according to claim 1, **characterized in that** the information item for contacting the message sender (1) or the respective message receiver (6, 7, 8, 27) in the telecommunication network (13) by an instant messaging in a compound structure of computer networks, such as the internet or an intranet is allocated to the contacting information item of the message sender (1) and/or the at least one message receiver (6, 7, 8, 27).

3. A method according to claim 2, **characterized in that** the allocation of the contacting information to each other is used for transmitting the messages, wherein the contacting information item of the sender (1) and/or the at least one message receiver (6, 7, 8, 27) which allows an instant messaging in a compound structure of computer networks, such as the internet or an intranet, is not communicated to the concerned message sender (1) and/or the concerned message receivers (6, 7, 8, 27) during the transmission of the messages.

4. A method according to claim 2 or claim 3, **characterized in that** the allocation of the contacting information to each other is generated by a logic linkage which preferably takes place once, wherein the contacting information preferably belong to one single user (message sender (1) or message receiver (6, 7, 8, 27)).

5. A method according to one of the claims 2 through 4, **characterized in that** the allocation of the contacting information of a user (message sender (1) or message receiver (6, 7, 8, 27)) to each other is not visible for other users (message senders (1) or message receivers (6, 7, 8, 27)).

6. A method according to one of the claims 1 through 5, **characterized by** a transmission of the messages to the contacting information item of the message sender (1) and/or the at least one message receiver (6, 7, 8, 27) in the telecommunication network (13) and to the contacting information item of the message sender (1) and/or the at least one message receiver (6, 7, 8, 27) which allows an instant messaging in a compound structure of computer networks, such as the internet or an intranet.

7. A method according to one of the claims 1 through 6, **characterized by** a transmission of the messages to the contacting information item of the message sender (1) and/or the at least one message receiver (6, 7, 8, 27) which allows an instant messaging in a compound structure of computer networks, such as the internet or an intranet, if the respective message sender (1) and/or the respective message receiver (6, 7, 8, 27) can be reached within the compound structure of computer networks, such as the internet or an intranet.

8. A method according to one of the claims 1 through 7, **characterized in that** the contacting information item of the message sender (1) and/or the at least one message receiver (6, 7, 8, 27) which allows an instant messaging in a compound structure of computer networks, such as the internet or an intranet, is an unequivocal identification in the compound structure of computer networks, such as the internet or an intranet.

9. A method according to one of the claims 1 through 8, **characterized in that** the message content is provided with the grouping information item.

10. A method according to one of the claims 1 through 9, **characterized in that** the contacting information item of the respective message receiver (6, 7, 8, 27) is provided with the grouping information item.

11. A method according to one of the claims 1 through 9, **characterized by** a use of the grouping information item as information item for contacting the message sender (1) in the telecommunication network (13).

12. A method according to one of the claims 1 through 11, **characterized by** a use of the grouping information item by message receivers (6, 7, 8, 27) who reply to the message as information item for contacting the message sender (1) and/or other message receivers (6, 7, 8, 27) in the telecommunication network (13).

13. A method according to one of the claims 1 through 12, **characterized in that** the grouping information item is a call number (MSISDN) in the telecommunication network (13).

14. A method according to one of the claims 1 through 13, **characterized by** a use of the grouping information item for billing utilizations of the message service of the telecommunication network (13), preferably for a charge-reduced billing of utilizations of the message service of the telecommunication network (13).

15. A method according to one of the claims 1 through 14, **characterized by** a dialogue between the telecommunication network (13) and the message sender (1) which takes place before the grouping information item is generated and which serves to activate or refuse the grouping.

16. A method according to claim 15, **characterized in that** the dialogue is realized by means of a message service of the telecommunication network (13).

17. A method according to one of the claims 1 through 16, **characterized by** a short message service (SMS) as message service of the telecommunication network (13).

18. A method according to one of the claims 1 through 17, **characterized by** the use of a terminal (1, 6, 7, 8, 27) which can be operated in a telecommunication network (13), preferably in form of a mobile terminal (1, 6, 7, 8, 27) which can be operated in a mobile radio network (13), by the message sender (1) and/or the message receivers (6, 7, 8, 27).

19. A network node in a telecommunication network (13),
preferably a mobile radio network (13) according to a GSM, GPRS and/or UMTS radio network standard,
which network node
is involved in the transmission of messages in the telecommunication network (13) by means of a message service of the telecommunication network (13),
**characterized in that**
this network node is configured and/or adapted to carry out a method according to one of the claims 1 through 18.

20. A network node according to claim 19.
**characterized by**
at least one unit for receiving
messages which comprise
a message content and
at least one information item for contacting a message receiver in a telecommunication network (13),
at least one unit for detecting that a message sender (1) sends at least two messages successively to different message receivers (6, 7, 8, 27) within a predeterminable period of time,
at least one unit for detecting the length and/or the identity of the message contents of the messages,
at least one unit for comparing the length and/or the identity of the message contents,
at least one unit for generating an information item for at least grouping the message sender (1) and the message receivers (6, 7, 8, 27) by the network in case of an identical length and/or an identity of the message contents,
a unit for providing the messages with the grouping information item and
at least one unit for transmitting the messages to the messages receivers (6, 7, 8, 27) while using the grouping information item and at least the contacting information item of the respective message receivers (6, 7, 8, 27).

21. A network node according to claim 19 or claim 20, **characterized in that** this one is a switchboard device (SMSC) for the message service of the telecommunication network (13).

22. A network node according to one of the claims 19 through 21, **characterized in that** this one is a server device for the message service of the telecommunication network (13).

## Revendications

1. Procédé de transmission de messages dans des réseaux de télécommunication (13),
de préférence des réseaux radio mobile (13) selon un standard de réseau radio GSM, GPRS et/ou UMTS,
par moyen d'un service de messages d'un réseau de télécommunication (13),
dans lequel
un message comprenant un contenu de message et
au moins une information pour contacter le récepteur de messages (6, 7, 8, 27) dans un réseau de télécommunication (13) est reçu
pour chaque récepteur de messages (6, 7, 8, 27) par moyen d'au moins un
noeud du réseau de télécommunication (13) qui contribue à la transmission de messages,
**caractérisé en ce**
**que**
le noeud détermine à l'aide des messages reçus qu'un émetteur de messages (1) envoie au moins deux messages successivement à des récepteurs de messages différents (6, 7, 8, 27) dans une période de temps prédéterminable,
la longueur et/ou le contenu des contenus de messages est saisi,
s'il y a une longueur identique et/ou une similarité des contenus de messages,
une information sera générée pour au moins grouper l'émetteur de messages (1) et les récepteurs de messages (6, 7, 8, 27) par le réseau,
les messages sont pourvus de l'information de groupement et
les messages sont transmis aux récepteurs de messages (6, 7, 8, 27) en utilisant l'information de groupement et au moins l'information de contact des récepteurs de messages respectifs (6, 7, 8, 27),
dans lequel
l'information de contact de l'émetteur de messages (1) et/ou d'au moins un récepteur de messages (6, 7, 8, 27) permet un messagerie instantée dans une structure composée de réseaux d'ordinateurs, tels que l'internet ou un intranet.

2. Procédé selon la revendication 1, **caractérisé en ce que** l'information pour contacter l'émetteur de messages (1) et/ou l'au moins un récepteur de messages (6, 7, 8, 27) respectif dans le réseau de télécommunication (13) par messagerie instantée dans une structure composée de réseaux d'ordinateurs, tels que l'internet ou un intranet est attribuée à l'information de contact de l'émetteur de messages (1) et/ou de l'au moins un récepteur de messages (6, 7, 8, 27).

3. Procédé selon la revendication 2, **caractérisé en ce que** l'attribution des informations de contact les unes aux autres est utilisée pour la transmission des messages, l'information de contact de l'émetteur de messages (1) et/ou de l'au moins un récepteur de messages (6, 7, 8, 27) laquelle permet un messagerie instantée dans une structure composée de réseaux d'ordinateurs, tels que l'internet ou un intranet, n'étant pas communiquée à l'émetteur de messages concerné (1) et/ou aux récepteurs de messages concernés (6, 7, 8, 27).

4. Procédé selon la revendication 2 ou la revendication 3, **caractérisé en ce que** l'attribution des informations de contact les unes aux autres est générée par un enchaînement logique qui est de préférence réalisé une seule fois, les informations de contact appartenant de préférence à un seul utilisateur (émetteur de messages (1) ou récepteur de messages (6, 7, 8, 27)).

5. Procédé selon l'une des revendications 2 à 4, **caractérisé en ce que** l'attribution des informations de contact d'un utilisateur (émetteur de messages (1) ou récepteur de messages (6, 7, 8, 27)) les unes aux autres n'est pas visible pour d'autres utilisateurs (émetteurs de messages (1) ou récepteurs de messages (6, 7, 8, 27)).

6. Procédé selon l'une des revendications 1 à 5, **caractérisé par** une transmission des messages à l'information de contact de l'émetteur de messages (1) et/ou de l'au moins un récepteur de messages (6, 7, 8, 27) dans un réseau de télécommunication (13) et à l'information de contact de l'émetteur de messages (1) et/ou de l'au moins un récepteur de messages (6, 7, 8, 27) laquelle permet un messagerie instantée dans une structure composée de réseaux d'ordinateurs, tels que l'internet ou un intranet.

7. Procédé selon l'une des revendications 1 à 6, **caractérisé par** une transmission des messages à l'information de contact de l'émetteur de messages (1) et/ou de l'au moins un récepteur de messages (6, 7, 8, 27) laquelle permet un messagerie instantée dans une structure composée de réseaux d'ordinateurs, tels que l'internet ou un intranet au cas où on peut toucher l'émetteur de messages respectif (1) et/ou le récepteur de messages respectif (6, 7, 8, 27) dans la structure composée de réseaux d'ordinateurs, tels que l'internet ou un intranet.

8. Procédé selon l'une des revendications 1 à 7, **caractérisé en ce que** l'information de contact de l'émetteur de messages (1) et/ou de l'au moins un récepteur de messages (6, 7, 8, 27) laquelle permet un messagerie instantée dans une structure composée de réseaux d'ordinateurs, tels que l'internet ou un intranet, est une identification univoque dans la structure composée de réseaux d'ordinateurs, tels que l'internet ou un intranet.

9. Procédé selon l'une des revendications 1 à 8, **caractérisé en ce que** le contenu de message est pourvu de l'information de groupement.

10. Procédé selon l'une des revendications 1 à 9, **caractérisé en ce que** l'information de contact du récepteur de messages respectif (6, 7, 8, 27)) est pourvue de l'information de groupement.

11. Procédé selon l'une des revendications 1 à 9, **caractérisé par** une utilisation de l'information de groupement en tant que information pour contacter l'émetteur de messages (1) dans le réseau de télécommunication (13).

12. Procédé selon l'une des revendications 1 à 11, **caractérisé par** une utilisation de l'information de groupement des récepteurs de messages (6, 7, 8, 27) qui répondent au message en tant que information pour contacter l'émetteur de messages (1) et/ou d'autres récepteurs de messages (6, 7, 8, 27) dans le réseau de télécommunication (13).

13. Procédé selon l'une des revendications 1 à 12, **caractérisé en ce que** l'information de groupement est un numéro d'appel (MSISDN) dans le réseau de télécommunication (13).

14. Procédé selon l'une des revendications 1 à 13, **caractérisé par** une utilisation de l'information de groupement pour facturer des utilisations du service de messages du réseau de télécommunication (13), de préférence pour une facturation à tarifs réduits des utilisations du service de messages du réseau de télécommunication (13).

15. Procédé selon l'une des revendications 1 à 14, **caractérisé par** un dialogue entre le réseau de télécommunication (13) et l'émetteur de messages (1) qui a lieu avant la génération de l'information de groupement et qui sert à activer ou refuser le groupement.

16. Procédé selon la revendication 15, **caractérisé en ce que** le dialogue se fait par moyen d'un service de messages du réseau de télécommunication (13).

17. Procédé selon l'une des revendications 1 à 16, **caractérisé par** un service de messages courts (SMS) en tant que service de messages du réseau de télécommunication (13).

18. Procédé selon l'une des revendications 1 à 17, **caractérisé par** l'utilisation d'un terminal (1, 6, 7, 8, 27) opérable dans un réseau de télécommunication (13), de préférence sous forme d'un terminal mobile (1, 6, 7, 8, 27) opérable dans un réseau radio mobile (13), par l'émetteur de messages (1) et/ou par les récepteurs de messages (6, 7, 8, 27).

19. Noeud dans un réseau de télécommunication (13),
de préférence dans un réseau radio mobile (13) selon un standard de réseau radio GSM, GPRS et/ou UMTS,
lequel
contribue à la transmission de messages dans le réseau de télécommunication (13) par moyen d'un service de messages du réseau de télécommunication (13),
**caractérisé en ce que**
celui-ci est configuré et/ou adapté à exécuter un procédé selon l'une des revendications 1 à 18.

20. Noeud selon la revendication 19,
**caractérisé par**
au moins une unité pour recevoir
des messages qui comprennent
un contenu de message et
au moins une information pour contacter un récepteur de messages dans un réseau de télécommunication (13),
au moins une unité pour détecter qu'un émetteur de messages (1) envoie au moins deux messages successivement à des récepteurs de messages différents (6, 7, 8, 27) dans une période de temps prédéterminable,
au moins une unité pour détecter la longueur et/ou le contenu des contenus de message des messages,
au moins une unité pour comparer la longueur et/ou la similarité des contenus de message,
au moins une unité pour générer une information pour au moins grouper l'émetteur de messages (1) et les récepteurs de messages (6, 7, 8, 27) par le réseau s'il y a une longueur identique et/ou une similarité des contenus de message,
une unité pour pourvoir les messages de l'information de groupement et
au moins une unité pour transmettre les messages aux récepteurs de messages (6, 7, 8, 27) en utilisant l'information de groupement et au moins l'information de contact des récepteurs de messages respectifs (6, 7, 8, 27).

21. Noeud selon la revendication 19 ou la revendication 20, **caractérisé en ce que** celui-ci est un dispositif de commutation (SMSC) du service de messages du réseau de télécommunication (13).

22. Noeud selon l'une des revendications 19 à 21, **caractérisé en ce que** celui-ci est un dispositif de serveur du service de messages du réseau de télécommunication (13).
